## Europäisches Patentamt

## European Patent Office

## Office européen des brevets

(19)

(11) Veröffentlichungsnummer: **0 044 907**
**B1**

(12) **EUROPÄISCHE PATENTSCHRIFT**

(45) Veröffentlichungstag der Patentschrift:
**12.03.86**

(21) Anmeldenummer: **81102526.1**

(22) Anmeldetag: **03.04.81**

(51) Int. Cl.⁴: **G 11 B 7/26**, G 11 B 7/24,
G 11 B 3/70

(54) **Verbesserte, optisch abzulesende, Informationsspeicherplatten und Verfahren zu ihrer Herstellung.**

(30) Priorität: **26.07.80 DE 3028498**

(43) Veröffentlichungstag der Anmeldung:
**03.02.82 Patentblatt 82/5**

(45) Bekanntmachung des Hinweises auf die Patenterteilung:
**12.03.86 Patentblatt 86/11**

(84) Benannte Vertragsstaaten:
**DE FR GB IT NL**

(56) Entgegenhaltungen:
**DE - A - 2 512 372**
**DE - A - 2 839 395**
**DE - A - 2 853 262**
**DE - A - 3 019 189**

**KUNSTSTOFFHANDBUCH Band I, C. Hanser Verlag
1975, Seite 1008**

(73) Patentinhaber: **Röhm GmbH, Kirschenallee
Postfach 4242, D-6100 Darmstadt 1 (DE)**

(72) Erfinder: **Hennig, Jürgen, Dr. Dipl.-Phys.,
Mittermayerweg 9, D-6100 Darmstadt-Kranichstein (DE)**
Erfinder: **Vetter, Heinz, Dr.-Ing. Dipl.-Ing.,
Taunusstrasse 92, D-6101 Rossdorf (DE)**
Erfinder: **Buck, Manfred, Dr. Dipl.-Phys.,
Stephan-George-Weg 48, D-6100 Darmstadt (DE)**

## Beschreibung

Die Erfindung betrifft verbesserte, optisch abzulesende, Informationsspeicherplatten und ein Verfahren zu ihrer Herstellung. Bei der gespeicherten Information kann es sich um zur optischen und/oder akustischen Wiedergabe geeignete Information handeln, also beispielsweise um Video- oder Schallplatten.

Die Fixierung von optisch ablesbarer Information auf an sich transparenten Trägerplatten ist bereits bekannt. Sie kann beispielsweise durch Auslösung exakt lokalisierter chemischer bzw. physikalischer Umwandlungen, die Löcher im Micron bzw. Submicronbereich in einer auf der Scheibenoberfläche angebrachten Spur entsprechender materieller Zusammensetzungen hervorrufen (Datenspur), vorgenommen werden (vgl. NL-A-7 609 610).

Ein Schutz der Datenspur gegenüber mechanischer Beschädigung kann beispielsweise durch Überziehen beispielsweise mit Acroleindampf und nachfolgender Polymerisation desselben erreicht werden (US-PS 3 687 664).

Es bedeutet einen wesentlichen Fortschritt der optisch ablesbaren Informationsspeicherplatten, dass die Datenspur sich nicht an der Oberfläche der Träger befinden muss, sondern auf einer Zwischenschicht angeordnet sein kann. Dies erreicht man beispielsweise dadurch, dass die Information in an sich bekannter Weise zunächst als Datenspur an der Oberfläche einer Scheibe fixiert wurde, die mit einer zweiten, in der Regel dimensionsgleichen Scheibe, zu der im wesentlichen fertigen Informationsspeicherplatte gefügt wird.

Eine sekundäre Veränderung der gespeicherten Information ist normalerweise dann nicht mehr möglich, d.h. die Sorge um die Unversehrtheit der auf dem Ton- bzw. Bildträger gespeicherten Information, die vor allem bei der klassischen Schallplatte vorherrschte, ist gegenstandslos geworden.

Allerdings bringt die Herstellung der vorstehend geschilderten optisch ablesbaren Informationsspeicherplatten eine Reihe neuer und eigener Probleme mit sich. Ein Aspekt liegt in der Auswahl eines geeigneten transparenten und mechanisch hinreichend stabilen Trägermaterials. Verwendet werden als Träger z.B. Polyvinylchlorid, Polystyrol und Poly(meth)acrylat, die ggf. mit einem Oberflächenüberzug aus einem anderen transparenten Kunststoff (Celluloseacetobutyrat, Acrylatlack etc.) versehen sein können. Naturgemäss spielt die optische Qualität des Materials, insbesondere die optische Homogenität, eine wichtige Rolle. Welche Probleme in mechanischer und fertigungstechnischer Hinsicht zu lösen sind, wird allein schon aus der Forderung deutlich, dass die Trägerplatten möglichst dünn sein sollen, d.h. in der Praxis eine Dicke im 1–2 mm-Bereich besitzen. Für die Technik der Bildplattenherstellung ist u.a. von Belang, dass die Trägerplatten bei der Aufnahme und beim Abspielen der Information hohe Drehgeschwindigkeiten aushalten müssen. Drehgeschwindigkeiten von 1 800 rpm sind die Regel. Durch Dickenunterschiede bedingte Unwucht der Platten kann zu unzulässigen Vibrationen bei den rotierenden Platten führen. In der britischen Patentanmeldung 2 005 155 wird der Schluss gezogen, mit Polyesterscheiben (für photographische Zwecke), Acrylscheiben und gepressten Vinylscheiben könne nicht der erforderliche Grad an Oberflächenperfektion erreicht werden und sie seien darum total ungeeignet für den beabsichtigten Zweck. Die Perfektion der Oberfläche kann gemäss der britischen Patentanmeldung durch Überziehen mit kommerziellen transparenten Lacken erreicht werden.

Gemäss der DE-OS 2 726 063 haben Methacrylsäurepolymerisate eine schlechte Flussfähigkeit beim Formen oder Verpressen, eine schlechte Abriebfestigkeit und eine schlechte Biege- und Schlagbiegefestigkeit. Als Konsequenz wird in der genannten DE-OS die Verwendung von Polymerisaten mit 40–90 Gew.-% an ungesättigten Nitrilen, z.B. (Meth)acrylnitril für die Trägerplatten vorgeschlagen. Grundsätzlich stehen dem Fachmann zwar Fertigungstechniken zur Herstellung von Platten aus geeigneten Kunststoffen, wie Spritzgiessen oder Extrudieren zur Verfügung, aber die Einhaltung der unerlässlichen Dimensionsstabilität und -genauigkeit der Platten als Informationsträger stiess in der Praxis auf ausserordentliche Schwierigkeiten. Die Praxis zeigt, dass gerade dünne Platten, wie sie für die Anwendung als Informationsträger besonders geeignet und unter ökonomischen Gesichtspunkten erwünscht sind, besonders anfällig gegen Verwerfungen sind, deren hauptsächliche Ursache allerdings bisher im Dunkeln lag. Derartige, bei Verwendung der üblichen Fertigungsmethoden auftretende Verwerfungen können nicht toleriert werden, weil sie gleichbedeutend sind mit Unwucht und Abbildungsunschärfe bei den Informationsträgern. Zu den oft geübten Routinemassnahmen zum Schutz geformten Kunststoffs gehört beispielsweise das Abdecken der geformten Teile gegen Verkratzen und Verstauben. Zur Lösung der oben dargelegten Probleme hat das routinemässige Abdecken nicht in erkennbarem Ausmass beigetragen.

Der vorliegenden Erfindung liegt die Feststellung zugrunde, dass eine zwischen Urformung und Informationsaufgabe erfolgte Wasseraufnahme ursächlich mit den untolerierbaren Verwerfungen zusammenhängt, wobei sowohl eine unmittelbare als eine mittelbare Auswirkung eintreten kann:

Unmittelbar, insofern in Form von lokal auftretenden Dehnungen Spannungen resultieren, die zu den Verwerfungen führen; mittelbar insofern derartige Spannungen relaxieren und selbst bei Rücktrocknung untolerierbare Verwerfungen hinterlassen.

Es wurde nun ein Verfahren zur Herstellung von technisch befriedigenden optisch abzulesenden Informationsspeicherplatten mit hinreichender Dimensionsstabilität und -genauigkeit aus optisch durchlässigem Polymethylacrylat, wobei die Informationsspeicherplatten die optisch abzulesende Information auf einer oder zwei zu der Plattenoberfläche parallelen Zwischenschichten enthalten, durch Fügen zweier Scheiben, die etwa die halbe Dicke der fertigen Informationsspeicherplatte besitzen, wobei bei der Urformung und den anschliessenden Bearbeitungsschritten die Wasseraufnahme des Polymethylmethacrylats (PMMA) möglichst gering gehalten und die Ausbildung des Feuchtigkeitsgradienten über Plattendicke und -durchmesser minimiert wird.

Bei der Durchführung des technischen Handelns gemäss der vorliegenden Erfindung kann nicht von der Vorstellung ausgegangen werden, als lasse sich die Wasseraufnahme der Platten von der Urformung bis zur Informationsaufgabe völlig vermeiden. Das erfindungsgemässe technische Handeln hat als eigentliches Ziel, die Ausbildung von mechanischen Spannungen bzw. lokal unterschiedlichen Dehnungen als Folge eines Feuchtigkeitsgradienten über Plattendicke und -durchmesser zu minimieren. Das Ziel der Vermeidung eines Feuchtigkeitsgradienten lässt sich in der industriellen Praxis am einfachsten dadurch erreichen, dass man die Wasseraufnahme pro Zeiteinheit minimiert. Bei der praktischen Realisierung muss also davon ausgegangen werden, dass das Wasserangebot aus der Umgebung minimiert wird. Das erfindungsgemässe technische Handeln umfasst daher beispielsweise ein unmittelbar nach der Urformung erfolgendes Einschlagen in einen Behälter mit hohem Wasserdampfdiffusionswiderstand, wobei das nicht von Scheiben bzw. Platten erfüllte Volumen zweckmässig ebenfalls minimiert wird.

Die Durchführung des erfindungsgemässen Verfahrens findet daher zweckmässigerweise in trockener Atmosphäre statt. Wegen der besonderen Anfälligkeit von dünnen Scheiben bzw. Platten (s. oben) ist es zweckmässig, die Scheiben bzw. Platten selbst beidseitig mit einer diffusionshemmenden Schicht, beispielsweise einer entsprechenden Folie, abzudecken. Auch das Abdecken mit einer diffusionshemmenden Schicht wird zweckmässig möglichst frühzeitig vorgenommen, z.B. bei Herstellung der Scheiben mittels Extrusion durch Coextrusion oder Einlaufenlassen einer Folie in Düse oder Kalander, der Extrusionslage. Beim Spritzgiessen der Scheiben ergeben sich adäquate Technologien, z.B. Beschichtung bereits im Werkzeug oder unmittelbare Versiegelung des spritzgegossenen Teils. Unter praktischen Gesichtspunkten kommen als Behälter insbesondere solche aus Kunststoff, beispielsweise Polyäthylen, Polypropylen, Polystyrol oder aus Metallen vorzugsweise Aluminium bzw. aluminiumkaschierte Kunststoffe in Frage. Besonders geeignet sind Folien, die sich bekanntlich leicht fügen z.B. verschweissen lassen. Als Anhaltspunkt der Schichtdicke von Kunststoffen, die als Behälter dienen, können etwa Werte um 200 µm gelten. Entsprechend geringer können die Schichtdicken für die Abdeckung der individuellen Platten angesetzt werden. Sie liegen bei Verwendung von z.B. Polyäthylen bei ca. 50 µm. Die Permeation sollte bei einer Schichtdicke von ca. 200 µm bei 0,5–1 g/m²/24 h und 85% Feuchtigkeitsdifferenz und bei einer Schichtdicke von ca. 50 µm bei 2–4 g/m²/24 h und 85% Feuchtigkeitsdifferenz (nach DIN 53 122) liegen.

Eine besonders effektive Abdeckung erzielt man durch Einschlagen in mehrschichtige Behälter, wobei sich ggf. zwischen zwei Schichten ein Trockenmittel befinden kann. So hat sich bei längerer Lägerung das Einschlagen der Scheiben in doppelte Folien, zwischen die noch ein (gegenüber dem Folienmaterial inertes) Trockenmittel wie Calciumchlorid, Trockengel usw. eingebracht werden kann, bewährt. In diesem Fall kann die Dicke der Folie gegenüber der Verwendung einer einfachen Folie etwas reduziert werden.

Im Interesse der Vermeidung von Verwerfungen sollten die allgemein üblichen Massnahmen, wie sorgfältige Lagerung auf absolut ebener Auflagefläche usw., tunlichst beibehalten werden.

Zweckmässigerweise soll die Durchführung des erfindungsgemässen Verfahrens so gehandhabt werden, dass der Wassergehalt des Kunststoffs 0,15%, vorzugsweise 0,1%, bezogen auf das Gewicht des Materials, nicht überschreitet.

**Patentansprüche**

1. Verfahren zur Herstellung von verbesserten optisch abzulesenden Informationsspeicherplatten mit erhöhter Dimensionsstabilität und -genauigkeit aus optisch durchlässigem Polymethylmethacrylat, wobei die Informationsspeicherplatten die optisch abzulesende Information auf einer oder zwei zur Plattenoberfläche parallelen Zwischenschichten fixiert enthalten, durch Fügen zweier Scheiben, die etwa die halbe Dicke der fertigen Informationsspeicherplatte besitzen, dadurch gekennzeichnet, dass bei der Urformung und bei anschliessenden Bearbeitungsschritten die Ausbildung des Feuchtigkeitsgradienten über Plattendicke und -durchmesser minimiert wird.

2. Verfahren gemäss Anspruch 1, dadurch gekennzeichnet, dass bei der Urformung und bei anschliessenden Bearbeitungsschritten die Wasseraufnahme des Polymethylmethacrylats minimiert wird.

3. Verfahren gemäss den Ansprüchen 1 und 2, dadurch gekennzeichnet, dass die Scheiben unmittelbar nach der Urformung in dichte Behälter von hohem Wasserdampfdiffusionswiderstand eingebracht und gegebenenfalls dann aufbewahrt werden.

4. Verfahren gemäss Anspruch 3, dadurch gekennzeichnet, dass der dichte Behälter aus einer Folie besteht, die gegebenenfalls verschweisst wird.

5. Verfahren gemäss den Ansprüchen 1 bis 4, dadurch gekennzeichnet, dass die Scheiben bzw. Platten zusätzlich beidseitig mit einer diffusionshemmenden Schicht abgedeckt sind.

**Claims**

1. Process for producing improved optically readable information storage plates having greater dimensional stability and accuracy of measurement from optically transparent polymethylmethacrylate, the information storage plates containing the optically readable information fixed on one or two intermediate layers parallel to the surface of the plate, by joining together two panes which are approximately half as thick as the finished storage plate, characterised in that, during the original shaping and subsequent machining steps, the formation of a moisture gradient over the thickness and diameter of the plates is minimised.

2. Process as claimed in claim 1, characterised in that, during the original shaping and in subsequent machining steps, the water uptake of the polymethylmethacrylate is minimised.

3. Process as claimed in claims 1 and 2, characterised in that, immediately after the original shaping, the panes are introduced into sealed containers with a high steam diffusion resistance and are optionally then stored.

4. Process as claimed in claim 3, characterised in that the sealed container consists of a film which is optionally welded.

5. Process as claimed in claims 1 to 4, characterised in that the panes or plates are additionally covered on both sides with a diffusion-inhibiting coating.

**Revendications**

1. Procédé pour la fabrication de disques de stockage d'informations à lecture optique améliorés, ayant une stabilité et une précision dimensionnelles accrues, en polyméthacrylate de méthyle transparent, les disques de stockage d'informations contenant l'information à lire optiquement fixée sur une ou deux couches intermédiaires parallèles aux surfaces du disque, par assemblage de deux disques qui ont à peu près la moitié de l'épaisseur du disque de stockage d'information fini, caractérisé en ce que, lors du moulage initial et lors des phases de traitement subséquentes, la formation du gradient d'humidité sur l'épaisseur et sur le diamètre du disque est réduite au minimum.

2. Procédé selon la revendication 1, caractérisé en ce que, lors du moulage initial et lors des phases de traitement subséquentes, l'absorption d'eau par le polyméthacrylate de méthyle est réduite au minimum.

3. Procédé selon la revendication 1 ou 2, caractérisé en ce que les disques sont introduits, immédiatement après leur moulage initial, dans des récipients étanches ayant une résistance élevée à la diffusion de la vapeur d'eau et, le cas échéant, y sont ensuite conservés.

4. Procédé selon la revendication 3, caractérisé en ce que le récipient étanche est fait d'une feuille mince qui est éventuellement soudée.

5. Procédé selon l'une quelconque des revendications 1 à 4, caractérisé en ce que les disques ou plaques sont en plus recouverts, sur leurs deux faces, d'une couche empêchant la diffusion.